## Europäisches Patentamt

## European Patent Office

## Office européen des brevets

(11) Veröffentlichungsnummer: **0 125 528**
A2

# (12) EUROPÄISCHE PATENTANMELDUNG

(21) Anmeldenummer: 84104454.8

(22) Anmeldetag: 19.04.84

(51) Int. Cl.³: **A 47 J 41/02**

(30) Priorität: 10.05.83 DE 3317106

(43) Veröffentlichungstag der Anmeldung:
21.11.84 Patentblatt 84/47

(84) Benannte Vertragsstaaten:
AT BE CH DE FR GB IT LI LU NL SE

(71) Anmelder: Rotpunkt Dr. Anso Zimmermann
Industriestrasse
D-6434 Niederaula / Bad Hersfeld(DE)

(72) Erfinder: Zimmermann, Anso, Dr.
Seilerweg 34
D-6434 Niederaula(DE)

(74) Vertreter: Körber, Wolfhart, Dr. et al,
Patentanwälte Dipl.-Ing. H. Mitscherlich Dipl.-Ing. K.
Gunschmann Dr.rer.nat. W. Körber Dipl.Ing. J.
Schmidt-Evers Dipl.-Ing. W. Melzer Steinsdorfstrasse 10
D-8000 München 22(DE)

(54) Eine geschlossene Schnaupe bildender Ausgiesser sowie Verfahren zur Herstellung eines damit versehenen Behälters.

(57) Es wird ein Behälter (3) mit einem Ausgießer (1)
angegeben, dessen Ausgießkanal (6) optimales Ausgießverhalten ermöglicht. Der Ausgießer (1) besteht aus einem an
den Behälter (3) angeformten Teil (8) mit einem dem Innenraum (9) zugewandten Abschnitt (10) des Ausgießkanals (6)
und einer sich daran anschließenden nach außen entformbaren Aufweitung (11) sowie einem Innenteil (12) mit dem
anderen Abschnitt (13) des Ausgießkanals (6), das in die
Aufweitung (11) vorzugsweise flüssigkeitsdicht einsetzbar
ist. Der dem Innenraum (9) zugewandte Abschnitt (10) des
Ausgießkanals (6) kann unabhängig von der Ausbildung des
Behälters (3) in bequemer Weise nach innen entformt werden. Das Innenteil (12) ist in einfacher Weise herstellbar. Das
Innenteil (12) kann in die Aufweitung (11) eingeklebt, eingeschweißt oder eingerastet sein. Bei der Herstellung kann das
bereits hergestellte und entformte Innenteil (12) durch den
Behälter (3) bzw. des an ihn angeformten Teils (8) des
Ausgießers (1) umspritzt werden. Unabhängig von der Form
des Behälters (3) kann dadurch der Ausgießkanal (6) bei einfacher Herstellbarkeit in Hinsicht auf optimales Ausgießverfahren bestimmt werden.

FIG.3

Croydon Printing Company Ltd.

Eine geschlossene Schnaupe bildender Ausgießer
sowie Verfahren zur Herstellung eines damit versehenen Behälters

_____

Die Erfindung betrifft einen eine geschlossene Schnaupe
mit sich nach außen nicht erweiterndem konusförmigen
Ausgießkanal bildenden mehrteiligen Ausgießer für
zumindest teilweise nach einem Spritzgießverfahren herstellbare Behälter, wobei zumindest ein Teil des Behälters und
zumindest ein Teil des Ausgießers einstückig ausgebildet sind, sowie ein Verfahren zum Herstellen
eines einen solchen Ausgießer aufweisenden Behälters,
bei dem um Kerne geformt wird und die Kerne dann zur
Entformung gezogen werden.

Ausgießer dienen dazu, eine in einem Behälter enthaltene Flüssigkeit gezielt ausgießen zu können.
Solche Behälter können zur Aufbewahrung von kalten
oder warmen Flüssigkeiten dienen. Bei den Behältern
kann es sich um Isolierbehälter handeln, die einen
Mantel und einen innerhalb des Mantels angeordneten
Isolierbehälter aufweisen. Es kann sich auch um einen
mit einer Wärmeisolierung versehenen Einsatz handeln.
Der Behälter besteht üblicherweise aus Kunststoff,
der Einsatz kann auch aus Glasoder Acrylglas bestehen.
Der Behälter als ganzes kann ebenfalls aus Acrylglas
bestehen. Der Behälter muß nicht notwendigerweise
einteilig sein, er kann mehrteilig ausgebildet sein.

Es sind beispielsweise Getränkebehälter und Isolierkannen mit offener Ausgießschnaupe bekannt. Zwar können solche offenen Schnaupen verhältnismäßig einfach herstellt werden, wobei der Verlauf des rinnenartigen Ausgießkanals nach Wunsch ausgebildet werden kann. Jedoch kann kein optimales Ausgießverhalten erreicht werden, insbesondere kann ein Überlaufen der Flüssigkeit beim Ausgießen nicht sicher vermieden werden.

Dieses Problem wird durch geschlossene Schnaupen überwunden. Jedoch treten bei der Herstellung von Behältern mit einem Ausgießer mit geschlossener Schnaupe Schwierigkeiten auf.

Bei einer bekannten Isolierkanne wird die geschlossene Schnaupe dadurch erreicht, daß der nach oben offene, rinnenförmige Ausgießkanal eines Behälters mit offener Schnaupe durch eine auf den Ausgießer aufgesetzte Verschlußplatte abgedeckt wird. Diese Verschlußplatte kann aufgeklebt, aufgeschweißt oder aufgerastet werden. Jedoch ergibt sich zwischen der Platte und dem Ausgießer eine nach außen sichtbare Trennfuge, die sehr leicht verschmutzt, was insbesondere bei hellfarbigen Ausgießern ungünstig ist. Ferner ist bei dieser Vorgehensweise ein optimaler röhrenförmig verlaufender oder sich nach außen konusförmig verjüngender Ausgießkanal mit einerseits kleinem Öffnungsquerschnitt und andererseits großen Außenabmessungen der Schnaupe nicht herstellbar , da dazu zu große Wandstärken erforderlich sind, was spritztechnisch nicht beherrscht werden kann.

Es ist bereits versucht worden, einen Ausgießer mit geschlossener Schnaupe und optimal gestaltetem Ausgießkanal herzustellen. Bei der spritzgießtechnischen Herstellung wird dazu um ein Kernteil geformt, das nach der Formung zwecks Entformung in Richtung des Innenraums des Behälters gezogen werden muß. Dies ist fertigungstechnisch jedoch nur dann möglich, wenn das Kernteil auch tatsächlich zum Innenraum gezogen werden kann, was nur dann möglich ist, wenn das den Ausgießer enthaltende Oberteil des Behälters einerseits gesondert hergestellt wird und andererseits eine besondere Gestaltung derart besitzt, daß das Ziehen des Kernteiles möglich ist. Dieses Oberteil kann daher nur als sehr schmaler Ring ausgebildet werden, wobei ferner bereits nicht jede beliebige Neigung des Ausgießkanals gegenüber der Ebene des Rings ein Ziehen des Kerns ermöglicht. Darüberhinaus kann zwangsweise an diesem Oberteil kein Griff mehr angeformt sein, da dieser dem Ausgießer gegenüberliegt und dadurch einem Ziehen des Kernteils entgegensteht.

Ein Behälter muß nicht nur ansprechendes Äußeres und gute innere Konstruktion besitzen, sondern muß optimales Ausgießen im Gebrauch ermöglichen, wobei er darüberhinaus schon aus Kostengründen einfach herstellbar sein muß. Werden also für einen Behälter Ausgießer mit optimalem Ausgießverhalten entwickelt, ergibt sich bei der Realisierung dann die Notwendigkeit eine zu Lasten des Ausgießverhaltens gehende Änderung der Form durchzuführen, um die Herstellung zu ermöglichen. Das bedeutet für die Praxis, daß von dem konusförmigen Ausgießkanal abgewichen werden muß, der optimales Ausgießen bewirkt, oder daß eine besondere Konstruktion des Behälters gewählt werden muß.

Es ist daher Aufgabe der Erfindung, einen Ausgießer der eingangs genannten Art so auszubilden, daß unabhängig von der Gestaltung des Behälters ein Ausgießer mit optimalem Ausgießverhalten, der in einfacher Weise herstellbar ist, verwendbar ist.

Ferner soll ein Verfahren angegeben werden, das die Herstellung von mit solchen Ausgießern versehenen Behältern in einfacher Weise ermöglicht.

Die Aufgabe wird bei einem Ausgießer der eingangs genannten Art erfindungsgemäß durch die kennzeichnenden Merkmale des Anspruches 1 gelöst.

Dieser Ausgießer wird durch dieMerkmale der Unteransprüche weitergebildet.

Die Aufgabe wird bei einem Verfahren der eingangs genannten Art erfindungsgemäß durch die kennzeichnenden Merkmale des Anspruches 16 oder des Anspruches 2o gelöst.

Die Erfindung geht also von der Überlegung aus, daß es technisch auf verhältnismäßig einfache Weise realisierbar ist, bei der Entformung ein (kurzes) Kernteil nach innen zu ziehen und ein anderes Kernteil nach außen zu ziehen, und daß es ferner technisch realisierbar ist, ein getrenntes Teil zu fertigen, das einerseits einen Teil des Ausgießkanals enthält und das andererseits in den durch den nach außen gezogenen Kern gebildeten Raum einsetzbar ist.

Auf diese Weise sind Beschränkungen bei der Gestaltung des Ausgießers und des Behälters unter dem Gesichtspunkt der Entformbarkeit des Ausgießkanals nicht mehr gegeben. Dadurch kann einerseits der Behälter entsprechend der gewünschten ansprechenden Gestaltung entworfen und gefertigt werden und kann ferner der Ausgießer an seiner Aussenseite dieser Gestaltung angepaßt sein und darüberhinaus einen optimal geformten Ausgießkanal besitzen. Einschränkungen bezüglich der Gestaltung der Außenseite des Ausgießers sind nicht gegeben; Fugen, die verschmutzen können, liegen nicht mehr vor. Dabei ist zu bemerken, daß die Herstellung äußerst kostengünstig ist. Ferner ist vorteilhaft, daß dann, wenn sich im Gebrauch ergibt, daß der Ausgießkanal noch nicht optimal ist, durch Änderung des Innenteils die erwünschte Ausgießfunktion erreicht werden kann, was bedeutet, daß lediglich die Form für das kleine Innenteil geändert werden muß, jedoch die demgegenüber sehr große Form für den übrigen Behälter unverändert bleiben kann, was offensichtlich kostengünstig für die Herstellung der zur Fertigung erforderlichen Werkzeuge ist. Darüberhinaus ist zu bemerken, daß das Innenteil bei Beschädigung gegen ein anderes in einfacher Weise ausgetauscht werden kann. Schließlich können dadurch, daß das Innenteil aus einem anderen Werkstoff und/oder einem andersfarbigen Werkstoff hergestellt ist, besondere Effekte insbesondere gestalterischer Art erreicht werden. Es sind also Ausgießer mit idealem Ausgießverhalten erreichbar, die unabhängig von der Außenform des Ausgießers und des Behälters sind und die darüberhinaus einfach und kostengünstig herstellbar sind. Ferner kann unabhängig von der Form des Ausgießers auch die Tropfenabreißkante an dem Innenteil

mit idealem Querschnitt mittels eines kleinen einfachen Werkzeugs hergestellt werden. Ferner kann bei geeigneter Ausbildung das gleiche Innenteil für verschieden gestaltete Ausgießer bzw. Behälter verwendet werden.

Bei einer besonderen Art der Herstellung kann der Behälter oder derjenige Teil des Behälters, an dem der zum Innenraum weisende Teil des Ausgießers angeformt ist, dadurch hergestellt werden, daß das zuvor hergestellte und entformte Innenteil in die Form für den Behälter bzw. Behälterteil eingebracht wird und unter Verwendung des nach innen zu entformenden Kernteils der Behälter bzw. der Behälterteil um dieses Innenteil gespritzt wird. Dabei ist zu bemerken, daß ganz allgemein die kostengünstigsten Herstellmethoden verwendbar sind, insbesondere Kunststoff-Spritzgießen.

Die Erfindung wird anhand der in der Zeichnung dargestellten Ausführungsbeispiele näher erläutert.

Es zeigen

Figur 1 schematisch im Schnitt den am Behälter angeformten Teil des Ausgießers sowie die Kerne zur Formung dieses Teil des Ausgießers,

Figur 2 im Schnitt das Innenteil des Ausgießers,

Figur 3 im Schnitt das in die Aufweitung des an den Behälter angeformten Teils des Ausgießers eingesetzte Innenteil ,

Figur 4 im Schnitt eine andere Ausführungsform des an den Behälter angeformten Teils des Ausgießers sowie des Innenteils,

Figur 5 vergrößert die Einzelheit V in Figur 4.

Figur 6 vergrößert im Schnitt die Einzelheit VI in
Figur 4,

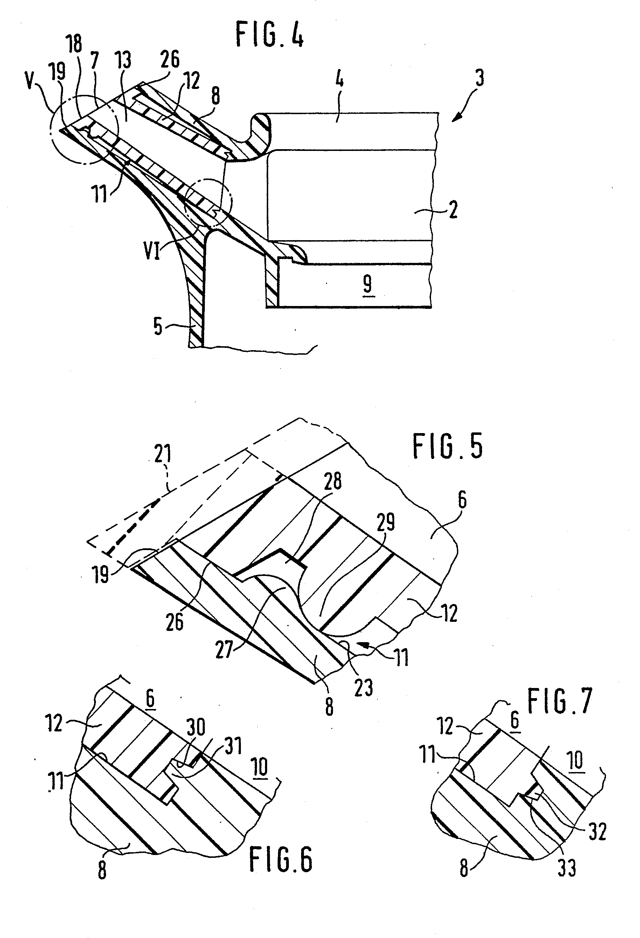

Figur 7 eine andere Ausführungsform der in Figur 6
dargestellten Ausführungform,

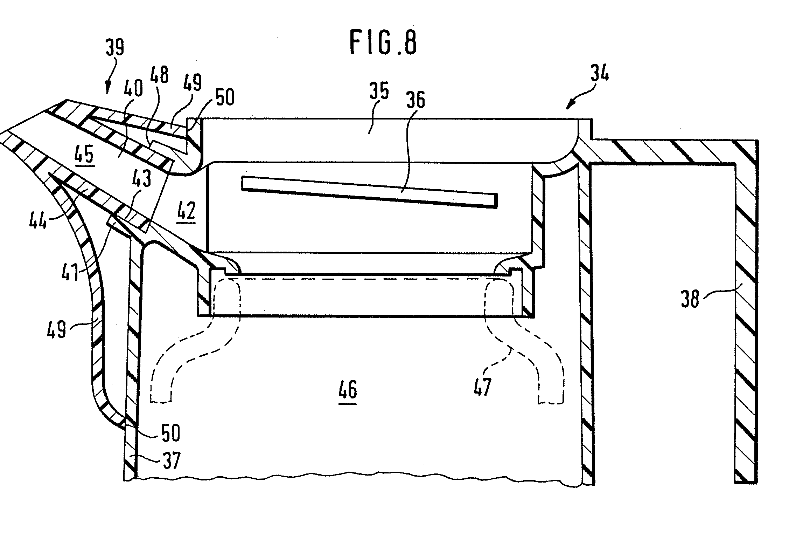

Figur 8 im Schnitt eine andere Ausführungsform des
am Behälterteil angeformten Teiles des Ausgießers und des in dessen Aufweitung eingesetzten Innenteils des Ausgießers.

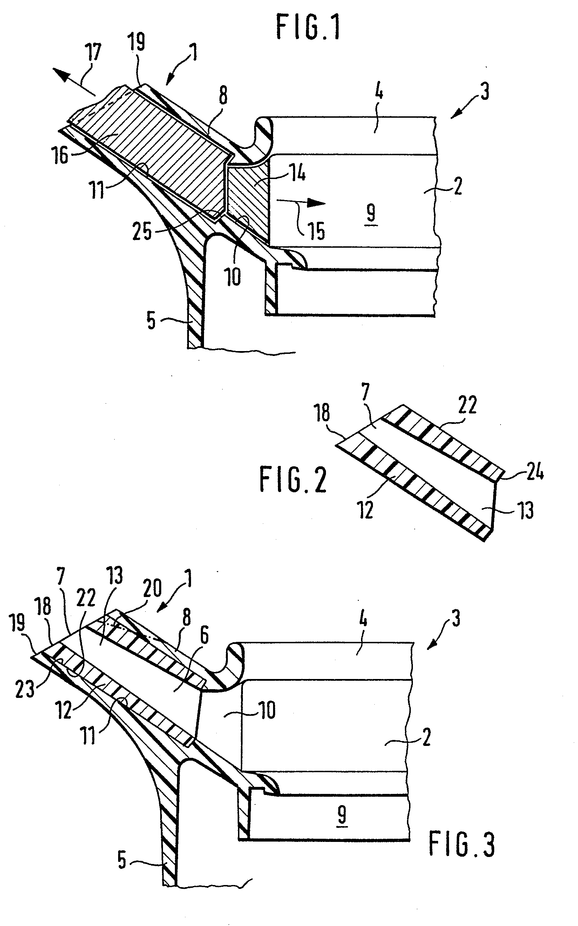

Fig. 1-3 zeigen im Schnitt den den Ausgießer 1 aufweisenden Halsteil 2 eines Behälters 3 aus Kunststoff.
In den Halsteil 2 des Behälters 3 ist ein Verschlußstopfen (nicht dargestellt) einsetzbar, insbesondere
einschraubbar. Beim dargestellten Ausführungsbeispiel
ist der Behälter 3 zur Aufnahme eines Isoliergefässes
(vergl. Figur 8) ausgebildet. Der Behälter kann jedoch
auch zur direkten Aufnahme von Flüssigkeit ausgebildet
sein oder an ein (nicht dargestelltes) Gefäß zur Aufnahme von Flüssigkeiten angeformt oder angebracht
sein. Der Halsteil 2 des Behälters 3 weist eine Halsöffnung 4 sowie einen Mantel 5 auf, von dem lediglich
ein Teil dargestellt ist.

Der Ausgießer 1 weist einen sich nach außen nicht
erweiternden im wesentlichen konusförmigen Ausgießkanal 6 auf. Der Querschnitt des Ausgießkanals 6
kann kreisförmig, ellipsenförmig oder polygonförmig
(mit abgerundeten Ecken) zu sein. Der Ausgießkanal 6
ist beim dargestellten Ausführungsbeispiel sich nach
außen verjüngend ausgebildet.

Wesentlich ist,daß der Ausgießer 1 als geschlossene Schnaupe ausgebildet ist, daß also der Ausgießkanal 6 bis zur Ausgießöffnung 7 umgeben ist.

Bei der Herstellung von Behältern mit derartigem Ausgießer treten in der Praxis Schwierigkeiten beim Entformen auf. Es kann nämlich der Kern nicht in das Innere des Behälters herausgezogen werden, wie das insbesondere bei sich nach außen verjüngendem Ausgießkanal 6 erforderlich ist. Dieses Problem wird durch die erfindungsgemäße Ausbildung des Ausgießers 1 überwunden.

Der Ausgießer 1 besteht aus einem an dem Behälter 3 bzw. dem den Ausgießer aufweisenden Teil des Behälters 3 angeformten Teil 8 des Ausgießers, der über einen dem Innenraum 9 des Behälters 3 zugewandten Abschnitt einen Abschnitt 1o des konusförmigen Ausgießkanals 6 bildet. Im Anschluß daran weist der an den Behälter 3 angeformte Teil 8 eine sich nach außen öffnende zylinderförmige oder konusförmig erweiternde Aufweitung 11 auf. In die Aufweitung 11 ist ein Innenteil 12 des Ausgießers 1 von außen eingesetzt,das den übrigen Abschnitt 13 des Ausgießkanals 6 enthält. Der Abschnitt 13 und der Abschnitt 1o des Ausgießkanals 6 gehen bei in die Aufweitung 11 eingesetztem Innenteil 12 bündig ineinander über, derart, daß ein Ausgießkanal 6 mit optimalem Ausgießverhalten gebildet ist.

Der an den Behälter 3 angeformte Teil 8 des Ausgießers 1 mit der Aufweitung 11 kann in einfacher Weise hergestellt werden, da keine Probleme bei der Entformung auftreten. Wie in Figur 1 dargestellt, kann das den zum Innenraum weisenden Abschnitt 1o des Ausgießkanals 6 formende Kernteil 14 bei der Entformung gemäß dem Pfeil 15 zum Innenraum 9 des Behälters 3 herausgezogen werden. Das die Aufweitung 11 erreichende Kernteil 16 dagegenkann gemäß dem Pfeil 17 bei der Entformung nach außen abgezogen werden, was insbesondere dann sehr einfach ist, wenn die Aufweitung sich nach außen konusförmig erweitert.

Das Innenteil 12 des Ausgießers 1 kann, wie sich das aus Figur 2 ohne weiteres ergibt, in einfacher Weise hergestellt werden, ohne daß es einer besonderen Erläuterung bedarf.

Bei dem in Figur 3 dargestellten Ausführungsbeispiel des Ausgießers umgibt der am Behälter 3 angeformte Teil 8 des Ausgießers 1 dessen Innenteil 12 im wesentlichen vollständig und schließen die außenliegende Stirnseite 18 des Innenteils 12 und die außenliegende Stirnseite 19 des an den Behälter 3 angeformten Teils 8 bündig ab. Bei andersfarbiger Ausgestaltung des Innenteils 12 gegenüber dem Behälter 3 können hierdurch besondere optische Effekte erreicht werden. Ferner kann durch geeignete Ausbildung der Stirnseiten 18 und 19 eine für das Ausgießverhalten zweckmäßige Tropfenabreißkante gebildet werden.

Wie in Figur 3 durch eine Strichpunktlinie 2o dargestellt, muß der an den Behälter 3 angeformte Teil 8 nicht notwendigerweise das gesamte Innenteil 12 vollständig umgeben, wodurch bei einer andersfarbigen Ausbildung des Innenteils 12 gegenüber dem Behälter 3 wiederum andere optische Effekte erreicht werden können.

Gemäß einer anderen Ausführungsform, die in Figur 5 in Strichlinien dargestellt ist, kann der nach außen weisende Endabschnitt des Innenteils 12 über die Stirnseite 19 des am Behälter 3 angeformten Teils 8 hinausragen, derart, daß nur die Stirnseite 21 dieses Innenteils 12 nach außen weist.

In den Figuren 2 und 3 ist eine Auführungsform des Innenteils 12 gezeigt, dessen Außenwand 22 im eingesetzten Zustand bündig mit der Innenwand 23 der Aufweitung 11 abschließt...Ferner liegt die zum Innenraum weisende Stirnfläche 24 des Innenteils 12 bündig an einer entsprechenden Stufenwand 25 der Aufweitung 11 an. Zweckmäßigerweise ist das Innenteil 12 flüssig - keitsdicht in die Aufweitung 11 eingesetzt. Dies kann durch eine entsprechende Bemessung des Innenteils 12 gegenüber der Aufweitung 11 derart erreicht werden, daß eine Preßpassung erreicht ist. Vorteilhaft ist das Innenteil 12 in die Aufweitung 11 eingeklebt oder eingeschweißt.

Wie das in Figur 4 dargestellt ist, kann das Innenteil 12 auch im wesentlichen gleichmäßige Wandstärke besitzen und mit der Aufweitung 11 lediglich im Bereich der Stufenwand 25 über die Stirnfläche 24 und im Bereich der Ausgießöffnung 7 über einen die Stirnseite 18 aufweisenden Außenwandabschnitt 26 in die Aufweitung 11 aufgenommen sein, beispielsweise auch eingeschweißt oder eingeklebt sein. Zur konstruktiven Verstärkung können Längs- und/oder Querrippen an der Außenseite vorgesehen sein (nicht dargestellt).

Eine feste Aufnahme des Innenteils 12 in der Aufweitung 11 kann auch über eine Rastverbindung erreicht werden, wie sie beispielshaft in Figur 5 dargestellt ist. Die in Figur 5 dargestellte Rastverbindung weist an

der Innenwand 23 der Aufweitung 11 vorspringende Rastnoppen 27 sowie einen entsprechenden Rücksprung 28 in der Außenwand 22 des Innenteils 12 bzw. entsprechende Vorsprünge 29 auf. Im in die Aufweitung 11 eingesetzten Zustand greift der Rastnoppen 27 in den Rücksprung 28 bzw. hinter den Vorsprung 29 ein.

Ferner ist es, um eine flüssigkeitsdichte Aufnahme des Innenteils 12 in der Aufweitung 11 sicherzustellen, zweckmäßig, wenn zwischen der Stirnfläche 24 und der Stufenwand 25 ebenfalls eine dichte Eingriffsverbindung erreicht ist. Dies kann durch Dichtlippen zwischen den beiden Flächen 24,25 erreicht werden. Zweckmäßig ist jedoch in diesem Bereich eine Verzahnung vorzusehen, bei der wie gemäß Figur 6 die Stirnfläche 24 eine Vertiefung 30, die auch umlaufend sein kann, aufweist, während die Stufenwand 25 einen oder mehrere entsprechende Vorsprünge 31 aufweist. Andererseits kann, wie in Figur 7 dargestellt, die Stirnfläche 24 die Vorsprünge 32 und die Stufenwand 25 die Vertiefung 33 aufweisen. Schließlich können sich über den Umfangsverlauf der Stirnfläche 24 und der Stufenwand 25 die beiden Ausbildungen abwechseln, derart, daß ein verzahnter und flüssigkeitsdichter Eingriff erreicht ist.

Figur 8 zeigt die Anwendung der Erfindung bei einer in besonderer Weise ausgebildeten Isolierkanne. Der Behälter 34 weist einen Halsteil 35 mit Gewindeabschnitten 36 zum Einschrauben eines Verschlußstopfens auf. Der Mantel 37 des Behälters 34 erstreckt sich über zumindest einen wesentlichen Höhenabschnitt des Behälters 34. Am Oberende des Behälters 34, d.h. im Bereich des Halsteiles 35, sind an einer Seite ein Griff 38 angeformt, sowie auf der gegenüberliegenden Seite ein gemäß der Erfindung ausgebildeter Ausgießer 39 vorgesehen. Das heißt, der Ausgießer 39 bildet eine geschlossene Schnaupe und weist einen sich nach außen zumindest nicht erweiternden konusförmigen Ausgießkanal 4o auf. Auch hier besteht der Ausgießer aus
einem am Behälter 34 angeformten Teil 41 mit einem
Abschnitt 42 des Ausgießkanals und einer Aufweitung 43
sowie einem Innenteil 44 mit dem anderen Abschnitt
45 des Ausgießkanals, wobei das Innenteil 44 in die
Aufweitung 43 eingesetzt ist. Ferner ist wie in
Strichlinien dargestellt in den Innenraum 46 des
Behälters 34 ein Isolierbehälter 47 eingesetzt.

Bei dieser Ausführungsform ragt das Innenteil 44
vergleichsweise weit über die Stirnseite 48 des
am Behälter 34 angeformten Teils 41 hinaus und trägt
an der Außenseite eine Blende 49, die den ganzen Ausgießbereich überdecken kann und deren Stirnseite
5o an der Außenwand des Mantels 37 bzw. des Halsteils 35 zur Anlage kommt. Die Anlage kann, wie im
Bereich des Mantels 37 schematisch angedeutet, federnd
erfolgen. Es zeigt sich, daß auf diese Weise bei einem
einheitlichen Grundtyp des Behälters 34 unterschiedliche Gestaltungen des Ausgießerbereiches durch lediglich andere Ausbildung des Innenteils 44 mit Blende
49 erreichbar sind.

Es zeigt sich ferner, daß das Innenteil des Ausgießers
nicht nur aus einem anders gefärbten Werkstoff , sondern
auch aus einem andersartigen Werkstoff hergestellt
sein kann, d.h. nicht nur aus Kunststoff, sondern auch
                           Metall
beispielsweise aus /Porzellan oder Keramik, so daß nicht
nur gestalterische Vielfalt besteht, sondern auch
der jeweils optimale Werkstoff gewählt werden kann.

Auch der Behälter bzw. dessen den Ausgießer aufweisenden Teil
kann nicht nur aus Kunststoff sondern auch aus Metall, Keramik
oder dergleichen bestehen, d.h. aus jedem nach einem Spritzgießverfahren verarbeitbaren Werkstoff.

13  0125528

Ferner bietet diese Ausführung noch den besonderen
Vorteil, daß bei einer Beschädigung des Ausgießers
die im allgemeinen lediglich dessen Innenteil betrifft, dieses Innenteil sehr einfach gegen ein neues
Innenteil ausgetauscht werden kann.

Auf diese Weise können Behälter mit einem Ausgießer
geschaffen werden, der bei allen gestalterischen
Freiheiten optimales Ausgießverhalten besitzt. Dabei
ist einfache Entformung bei der Herstellung des Behälters möglich, so daß kostengünstige Herstellung
erreichbar ist.

Dies trifft insbesondere für den Fall zu, daß der
Mantel 5 bzw. 37 des Behälters 3 bzw. 34 sich über
einen wesentlichen Höhenabschnitt erstreckt, derart,
daß ein Kern für die Bildung des Ausgießkanals nicht nach
unten herausgezogen werden kann.

Das Herstellverfahren solcher Behälter besteht hinsichtlich des Ausgießers darin, daß das Kernteil
14 das den dem Innenraum 9 des Behälters 3 zugewandten
Abschnitt 1o des Ausgießkanals 6 bildet, in den Innenraum 9 abgezogen wird (Pfeil 15), während das die
Aufweitung 11 bildende Kernteil 16 nach außerhalb
(Pfeil 17) abgezogen wird, und daß dann das Innenteil
12 von außen in die Aufweitung 11 eingesetzt wird.

Gemäß einer vorteilhaften Weiterbildung kann dabei
das hergestellte und entformte Innenteil 12 anstelle
des Kernteiles 16 verwendet und bei der Herstellung
des Behälters 3 umspritzt werden, wodurch eine feste
und flüssigkeitsdichte Verbindung zwischen dem Innenteil 12 und dem am Behälter 3 angeformten Teil 8 des
Ausgießers 1 sichergestellt ist.

Durch die Erfindung können somit Behälter geschaffen werden, die einen als geschlossene Schnaupe ausgebildeten Ausgießer besitzen, der keine außenliegende Fuge besitzt und der in einfacher Weise unabhängig von der Ausbildung des Mantels und des Ausgießers selbst herstellbar ist, wobei der Ausgießkanal in Hinsicht auf optimales Ausgießverhalten entworfen werden kann.

Rotpunkt

Dr. Anso Zimmermann

Industriestraße

6434 Niederaula

ANSPRÜCHE

1) Eine geschlossene Schnaupe mit sich nach außen nicht erweiterndem konusförmigen Ausgießkanal (6,4o) bildender mehrteiliger Ausgießer (1,39) für zumindest teilweise nach einem Spritzgießverfahren herstellbare Behälter (3,34), wobei zumindest ein Teil des Behälters und zumindest ein Teil des Ausgießers einstückig ausgebildet sind, dadurch gekennzeichnet, daß der am Behälter (3,34) angeformte Teil (8,41) des Ausgießers (1,39) in seinem dem Innenraum (9,46) des Behälters (3,34) zugewandten Abschnitt einen Abschnitt (1o,42) des Ausgießkanals (6,4o) aufweist, daß der am Behälter (3,34) angeformte Teil (8,41) des Ausgießers (1,39) in seinem dem Innenraum (9,46) des Behälters (3,34) abgewandten Abschnitt eine sich zylinderförmig oder konusförmig erweiternde Aufweitung (11,43) aufweist, und daß ein Innenteil (12,44) des Ausgießers (1,39) in die Aufweitung (11,43) von außen eingesetzt ist und den übrigen Abschnitt (13,45) des Ausgießkanals (6,4o) aufweist.

2) Ausgießer nach Anspruch 1, dadurch gekennzeichnet, daß der am Behälter (3) angeformte Teil (8) des Ausgießers (1) das Innenteil (12) im wesentlichen vollständig umschließt.

3) Ausgießer nach Anspruch 1 oder 2, dadurch gekennzeichnet, daß das Innenteil (12,44) in die Aufweitung (11,43) flüssigkeitsdicht eingesetzt ist.

4) Ausgießer nach Anspruch 3, dadurch gekennzeichnet, daß das Innenteil (12) an der dem Innenraum (9) zugewandten Stirnseite (24) und/oder an der dieser zugewandten Stufenfläche (25) zwischen Ausgießkanal (6) und Aufweitung (11) des am Behälter (3) angeformten Teils (8) des Ausgießers (1) im eingesetzten Zustand flüssigkeitsdicht anliegende Dichtlippen aufweist.

5) Ausgießer nach Anspruch 3, dadurch gekennzeichnet, daß das Innenteil (12) an der dem Innenraum (9) zugewandten Stirnseite (24) und an der dieser zugewandten Stufenfläche (25) zwischen Ausgießkanal (6) und Aufweitung (11) des am Behälter (3) angeformten Teils (8) des Ausgießers (1) Vorsprünge (31;32) und entsprechend geformte Vertiefungen (30;33) aufweist, die im eingesetzten Zustand flüssigkeitsdicht ineinandergreifen.

6) Ausgießer nach einem der Ansprüche 1 bis 5, dadurch gekennzeichnet, daß das Innenteil (12,44) in die Aufweitung (11,43) eingeklebt ist.

7) Ausgießer nach einem der Ansprüche 1 bis 5, dadurch gekennzeichnet, daß das Innenteil (12,44) in die Aufweitung (11,43) eingeschweißt ist.

8) Ausgießer nach einem der Ansprüche 1 bis 5, dadurch gekennzeichnet, daß das Innenteil (12,44) in die Aufweitung (11,43) eingerastet ist (Figur 5).

9) Ausgießer nach einem der Ansprüche 1 bis 5, dadurch gekennzeichnet, daß der am Behälter (3,34) angeformte Teil (8,41) des Ausgießers (1,39) um das Innenteil (12,44) gespritzt ist.

1o) Ausgießer nach einem der Ansprüche 1 bis 9, dadurch gekennzeichnet, daß das Innenteil (12) an der außenliegenden Stirnseite (18) mit der außenliegenden Stirnseite (19) des am Behälter (3) angeformten Teils (8) bündig abschließt.

11) Ausgießer nach einem der Ansprüche 1 bis 9, dadurch gekennzeichnet, daß das Innenteil (12,44) an der außenliegenden Stirnseite (21) die außenliegende Stirnseite (19,48) des am Behälter (3,34) angeformten Teils (8,41) ab- bzw. überdeckt.

12) Ausgießer nach Anspruch 11, dadurch gekennzeichnet, daß die außenliegende Stirnseite des Innenteils (44) als den vorderen Ausgießbereich des Behälters (34) überdeckende Blende (49) ausgebildet ist.

13) Ausgießer nach einem der Ansprüche 1 bis 12, dadurch gekennzeichnet, daß das Innenteil (12,44) an der außenliegenden Stirnseite (18,21) eine Tropfenabreißkante trägt.

14) Ausgießer nach einem der Ansprüche 1 bis 13, dadurch gekennzeichnet, daß das Innenteil (12,44) aus einem anderen Werkstoff als der Behälter (3,34) besteht.

15) Ausgießer nach einem der Ansprüche 1 bis 14, dadurch gekennzeichnet, daß das Innenteil (12,44) aus einem andersfarbigen Werkstoff als der Behälter (3,34) besteht.

16) Verfahren zum Herstellen eines zumindest teilweise nach einem Spritzgießverfahren herstellbaren Behälters mit einem eine geschlossene Schnaupe mit sich nach außen nicht erweiterndem konusförmigen Ausgießkanal bildenden, mehrteiligen Ausgießer gemäß einem der Ansprüche 1 bis 15,
bei dem um Kerne geformt wird und die Kerne dann zur Entformung gezogen werden,
dadurch gekennzeichnet,
daß ein erstes Kernteil (14) zur Formung des dem Innenraum des Behälters zugewandten Abschnitts des Ausgießkanals verwendet und zur Entformung zum Innenraum gezogen (15) wird,
daß ein zweites Kernteil (16) zur Formung der Aufweiweitung verwendet und zur Entformung nach außen gezogen (17) wird und
daß anschließend das Innenteil flüssigkeitsdicht eingesetzt wird.

17) Verfahren nach Anspruch 16, dadurch gekennzeichnet, daß das Innenteil eingeklebt wird.

18) Verfahren nach Anspruch 16, dadurch gekennzeichnet, daß das Innenteil eingeschweißt wird.

0125528

19) Verfahren nach Anspruch 16, dadurch gekennzeichnet, daß das Innenteil eingerastet wird.

2o) Verfahren zum Herstellen eines zumindest teilweise nach einem Spritzgießverfahren herstellbaren behälters mit einem eine geschlossene Schnaupe mit sich nach außen nicht erweiterndem konusförmigen Ausgießkanal bildenden mehrteiligen Ausgießer gemäß einem der Ansprüche 1 bis 15, bei dem um Kerne geformt wird und die Kerne dann zur Entformung gezogen werden, dadurch gekennzeichnet, daß ein erstes Kernteil (14) zur Formung des dem Innenraum des Behälters zugewandten Abschnitts des Ausgießkanals verwendet wird, daß das entformte Innenteil als zweites Kernteil in Anschluß an das erste Kernteil angeordnet wird, daß der Behälter um erstes und zweites Kernteil gespritzt wird und daß bei der Entformung das erste Kernteil zum Innenraum gezogen wird.

0125528

FIG.1

FIG.2

FIG.3

FIG.4

FIG.5

FIG.6

FIG.7

FIG.8